# EUROPÄISCHE PATENTSCHRIFT

(11) **EP 2 715 216 B1**
(45) Veröffentlichungstag und Bekanntmachung des Hinweises auf die Patenterteilung: **03.06.2015**
(21) Anmeldenummer: 12719921.4
(22) Anmeldetag: 05.04.2012
(51) Int. Cl.: F21S 8/10

(54) **FAHRZEUGSCHEINWERFER MIT LED-LICHTMODULEN ZUR ERZEUGUNG EINER HAUPTLICHTVERTEILUNG UND EINER ZUSATZLICHTVERTEILUNG**
VEHICLE HEADLIGHT HAVING LED LIGHT MODULES FOR GENERATING A MAIN LIGHT DISTRIBUTION AND AN ADDITIONAL LIGHT DISTRIBUTION
PHARE DE VÉHICULE À MODULES LUMINEUX À DEL DESTINÉ À PRODUIRE UNE RÉPARTITION LUMINEUSE PRINCIPALE ET UNE RÉPARTITION LUMINEUSE SUPPLÉMENTAIRE

(30) Priorität: 30.05.2011 AT 7922011
(43) Veröffentlichungstag der Anmeldung: 09.04.2014
(73) Patentinhaber: Zizala Lichtsysteme GmbH, 3250 Wieselburg (AT)
(72) Erfinder: MOSER, Andreas, A-3350 Haag (AT); JUNGWIRTH, Johannes, A-3325 Ferschnitz (AT)
(74) Vertreter: Patentanwaltskanzlei Matschnig & Forsthuber OG
(86) Internationale Anmeldenummer: PCT/AT2012/050047
(87) Internationale Veröffentlichungsnummer: WO 2012/162713

(56) Entgegenhaltungen:
- EP-A1- 1 965 126
- EP-A2- 1 418 621
- EP-A2- 2 058 585
- DE-A1-102006 037 422
- DE-A1-102007 025 337
- DE-A1-102009 041 189
- US-A1- 2011 080 753

## Beschreibung

Die Erfindung betrifft einen Fahrzeugscheinwerfer zur Erzeugung einer Hauptlichtverteilung und einer Zusatzlichtverteilung, wobei der Fahrzeugscheinwerfer zwei oder mehr LED-Lichtmodule umfasst.

Es ist bekannt, einen Fahrzeugscheinwerfer aus einer Anzahl von Lichtmodulen, insbesondere LED-Lichtmodulen aufzubauen, welche im Betrieb, also bei leuchtenden Lichtmodulen, dem Scheinwerfer ein charakteristisches Aussehen entsprechend der Anordnung der Lichtmodule geben.

Dieses charakteristische Erscheinungsbild erzeugt einen hohen Wiedererkennungswert für die unterschiedlichen Automarken.

Mit einem solchen Scheinwerfer kann nun neben der Hauptlichtfunktion, z.B. einer Abblendlichtfunktion, eine Zusatzlichtfunktion, etwa ein Tagfahrlicht erzeugt werden. Dazu ist es in der Regel notwendig, dass andere Lichtmodule eingeschaltet sind oder weniger Lichtmodule eingeschaltet sind als bei der Hauptlichtfunktion, so dass bei aktivierter Zusatzlichtfunktion das charakteristische Erscheinungsbild des Scheinwerfers nicht mehr gegeben ist.

Es ist eine Aufgabe der Erfindung, einen Fahrzeugscheinwerfer zu schaffen, welcher sowohl bei aktivierter Hauptlichtfunktion als auch bei aktivierter Zusatzlichtfunktion über dasselbe optische Erscheinungsbild verfügt.

Diese Aufgabe wird mit einem Fahrzeugscheinwerfer nach Anspruch 1 gelöst.

Durch die spezielle Anordnung der Lichtaustrittsflächen der LED-Lichtquellen kann einerseits (durch die Anordnung der Lichtaustrittsflächen von LED-Lichtquellen zur Erzeugung der Hauptlichtverteilung in zumindest einer Zeile) ein hohes Maximum im Lichtstrom in einem bestimmten Bereich der Hauptlichtverteilung, z.B. bei einer Abblendlichtverteilung im Bereich der Hell-Dunkel-Linie erreicht werden, andererseits ergibt sich über die Verteilung der Lichtaustrittsflächen für die Zusatzlichtverteilung die für eine solche Lichtverteilung üblicherweise, etwa im Falle einer Tagfahrlichtverteilung, geforderte Ausdehnung über einen definierten vertikalen Bereich.

Außerdem ist gefordert, dass die Isolux-Linien, das sind Linien der gleichen Beleuchtungsstärke im Lichtbild einen charakteristischen vorgegebenen Verlauf aufweisen. Dieser wird dadurch erreicht, dass die Lichtaustrittsflächen erfindungsgemäß in einem Raster aus Zeilen und Spalten angeordnet sind.

Durch diese spezielle Anordnung kann auf eine oder mehrere Vorsatzoptiken, die zwischen den Lichtaustrittsflächen und der Linse angeordnet wäre, verzichtet werden.

Bei der Hauptlichtfunktion sind die beteiligten Lichtquellen in einer (oder mehreren) Reihe angeordnet. Die Linsen verteilen/ streuen das Licht in die Breite, so dass sich die einzelnen Lichtbilder der einzelnen Lichtquellen in der Zeile horizontal überlagern sodass kein Raster sichtbar wird. (Würden die Linsen "nur" die LED-Lichtquellen ohne Breitenstreuung abbilden, was aber nicht der Fall ist, würde ein Raster sichtbar werden.)

Obiges gilt auch für die anderen LED-Lichtquellen für die Zusatzlichtverteilung. In der horizontalen Erstreckung gibt es kein Raster, da das Lichtbild der LED-Lichtquellen horizontal gestreut wird. In der Vertikalen hingegen würde ein Raster entstehen, wenn nicht wie bei der Erfindung vorgesehen die LED-Lichtquellen fluchtend angeordnet wären. Ohne diese Anordnung würden sich dunkle horizontale Striche ergeben, wenn ein Spalt zwischen den LED-Chips wäre. Die Linse streut in der Vertikalen nur vergleichsweise wenig, da sonst zu viel Licht verteilt und kein ordentliches Maximum mehr im Lichtbild zustande kommen würde.

Es muss auch bedacht werden, dass die Hauptlichtfunktion (diese soll vorzugsweise optimal abgebildet werden), wie z.B. ein Abblendlicht, ebenfalls durch dieselbe Linse projiziert wird. Hier wird angestrebt, ein nur wenige Grad hohes Lichtbild (schmal) zu erzeugen.

Im Allgemeinen müssen die LED-Lichtquellen so angeordnet sein, dass sie möglichst nahe beim Brennpunkt (Brennlinie) der Linse zu liegen kommen, um Verzerrungen und Inhomogenitäten durch Abbildungsfehler der Linsen zu vermeiden.

Die LED-Lichtquellen, d.h. deren Lichtaustrittsflächen, liegen beispielsweise in einer ebenen Fläche (Ebene), die Fläche kann aber auch gekrümmt sein, wobei die Krümmung in etwa der Bildfeldwölbung der Linse folgt.

Von Vorteil ist es, wenn benachbarte Zeilen unmittelbar aneinander grenzen; gegebenenfalls kann es auch von Vorteil sein, wenn benachbarte Spalten ebenfalls unmittelbar aneinander angrenzen, es kann aber auch vorgesehen sein bzw. von Vorteil sein, wenn benachbarte Spalten zueinander beabstandet sind.

Erfindungsgemäss entspricht die vertikale Ausdehnung ("Höhe") einer Lichtaustrittsfläche der LED-Lichtquellen der Höhe jener Zeile, in welcher sie angeordnet ist, so dass der unmittelbar aneinander grenzenden Zeile gewährleistet ist, so dass sich keine horizontalen Streifen im Lichtbild bilden.

Ebenso ist gewährleistet, wenn die horizontale Ausdehnung ("Breite") einer Lichtaustrittsfläche einer LED-Lichtquelle der Breite jener Spalte entspricht, in welcher sie angeordnet ist, dass keine vertikalen Streifen im Lichtbild entstehen - diese Anordnung ist aber nicht unbedingt notwendig, da in der Regel aber die Entstehung von vertikalen Streifen im Lichtbild durch die Breitenausleuchtung der Linsen verhindert wird.

Die horizontalen (bzw. gegebenenfalls vertikalen) Begrenzungsseiten der Lichtaustrittsflächen in aneinander angrenzenden Zeilen (bzw. gegebenenfalls Spalten) fluchten zueinander, wodurch die Streifenbildung im Zusatz-Lichtbild verhindert wird.

Weiters ist es von Vorteil, wenn die Höhe aller Zeilen gleich ist und die Breite aller Spalten gleich ist. In diesem Fall können identische LED-Lichtquelle verwendet werden.

Beispielsweise sind Höhe und Breite der Zeilen und Spalten gleich, sodass sich quadratische Lichtaustrittsflächen ergeben.

Insbesondere ist es zur Erzeugung eines homogenen Lichtbildes von Vorteil, wenn in jeder Zeile genau eine Lichtaustrittsfläche von jeweils einer LED-Lichtquelle zur Erzeugung der Zusatzlichtverteilung angeordnet ist.

Um die erforderliche Breite der Lichtverteilung und ein in der Breite homogenes Lichtbild zu erreichen, ist es außerdem von Vorteil, wenn die Lichtaustrittsflächen der LED-Lichtquellen zur Erzeugung der Zusatzlichtverteilung über zwei oder mehr Spalten verteilt sind.

Weiters ist vorgesehen, dass die Lichtaustrittsflächen von LED-Lichtquellen zur Erzeugung der Hauptlichtverteilung in zumindest einer Zeile angeordnet sind, wobei in zumindest einer dieser Zeilen zwei oder mehrere Lichtaustrittsflächen von LED-Lichtquellen zur Erzeugung der Hauptlichtverteilung angeordnet sind, wobei die Lichtaustrittsflächen in unterschiedlichen Spalten angeordnet sind, wobei vorzugsweise die Lichtaustrittsflächen von LED-Lichtquellen zur Erzeugung der Hauptlichtverteilung in genau einer Zeile angeordnet sind.

Auf diese Weise kann optimal auf die an eine Hauptlichtverteilung gestellten Bedingungen (Maximum in der Lichtverteilung, Hell-Dunkel-Grenze bei Abblendlicht) eingegangen werden.

Die LED-Lichtquellen selbst bestehen aus einem Gehäuse, in welchem der Licht emittierende Chip, d.h. die Lichtaustrittsfläche, untergebracht ist. Das Gehäuse hat eine größere Ausdehnung als dieser Chip, sodass es in der Regel nicht möglich ist, Lichtaustrittsflächen (Chips) unmittelbar nebeneinander anzuordnen. Außerdem ist es notwendig, Leiterbahnen zu den LED-Lichtquellen zur Steuerung und Energieversorgung zu legen, außerdem muss auf entsprechende Kühlung der Lichtquellen geachtet werden.

All diesen Themen wird grundsätzlich durch die erfindungsgemäße versetzte Anordnung der Lichtaustrittsflächen Rechnung getragen, durch welche die Platzproblematik gelöst wird. Außerdem wird ein einfacheres Thermomanagement möglich, da durch das nicht aneinander grenzen der Lichtaustrittsflächen die entstehende Wärme einfacher abgeführt werden kann. Es sind entsprechend keine aufwändigen Kühler/Lüfter notwendig, u.U. ist auch eine rein passive Kühlung ausreichend. Insbesondere ist es in obigem Zusammenhang von Vorteil, wenn zumindest manche der benachbarten Spalten, in welchen die Lichtaustrittsflächen der LED-Lichtquellen zur Erzeugung der Hauptlichtverteilung angeordnet sind, durch jeweils eine Spalte voneinander getrennt sind.

Insbesondere ist es von Vorteil, wenn wie bei einer konkreten Ausgestaltung realisiert die Lichtaustrittsflächen von LED-Lichtquellen zur Erzeugung der Hauptlichtverteilung in mehreren Spalten angeordnet sind, welche Spalten durch jeweils eine dazwischen liegende Spalte getrennt sind.

Um den Bauraum in der Ebene der Lichtaustrittsflächen optimal auszunützen, kann weiters vorgesehen sein, dass zumindest eine LED-Lichtquelle eines LED-Lichtmoduls sowohl zur Erzeugung der Hauptlichtverteilung als auch zur Erzeugung der Zusatzlichtverteilung verwendet ist.

Insbesondere ist vorgesehen, dass genau eine LED-Lichtquelle eines LED-Lichtmoduls sowohl zur Erzeugung der Hauptlichtverteilung als auch zur Erzeugung der Zusatzlichtverteilung vorgesehen ist.

Weiters ist bei einer konkreten Ausführungsform vorgesehen, dass alle LED-Lichtquellen eines LED-Lichtmoduls identisch sind, insbesondere identisch hinsichtlich ihrer Lichtstärke.

Im Zusatzlicht-Betrieb werden die jeweils eingeschalteten LED-Lichtquellen dazu gedimmt betrieben.

Es kann aber auch vorgesehen sein, dass die LED-Lichtquellen zur Erzeugung der Hauptlichtverteilung lichtstärker sind als die LED-Lichtquellen zur Erzeugung der Zusatzlichtverteilung.

In diesem Fall werden nur jene LED-Lichtquellen, welche zu beiden Lichtverteilungen beitragen, im Zusatzlichtbetrieb gedimmt betrieben.

Zusammengefasst ist es also möglich, dass die "Haupt"-LED-Lichtquellen mit voller Leistung betrieben werden und die "Neben"-LED-Lichtquellen gepulst oder mit verminderter Stromstärke betrieben werden. Es ist aber auch denkbar, unterschiedliche Leistungsklassen der LED-Lichtquelle, untergebracht in einem günstigen Standardgehäuse, zu verwenden.

Die LEDs der Hauptlichtfunktion erzeugen eine gerade, horizontale Lichtverteilung mit relativ geringer vertikaler Erstreckung. Die Asymmetrie, gefordert bei z. B. Abblendlicht, wird über ein Asymmetriemodul realisiert.

Allerdings erzeugt in der Regel ein oben beschriebenes Layout an Lichtaustrittsflächen eine asymmetrische Zusatzlichtverteilung. Aus diesem Grund ist es zweckmäßig, wenn der Scheinwerfer zumindest ein LED-Lichtmodule mit einer ersten Anordnung von Lichtaustrittsflächen seiner LED-Lichtquellen aufweist, und wobei zumindest ein weiteres LED-Lichtmodul mit einer zweiten Anordnung von Lichtaustrittsflächen seiner LED-Lichtquellen vorgesehen ist, und wobei erste Anordnung der Lichtaustrittsflächen und die zweite Anordnung der Lichtaustrittsflächen bezüglich einer vertikalen Fläche, welche die optische Achse des LED-Moduls enthält, spiegelbildlich zueinander angeordnet sind.

Sowohl im linken als auch im rechten Scheinwerfer kommen entsprechend Modul mit einem Layout und Module mit einem dazu spiegelsymmetrischen Layout zum Einsatz.

Optimal lassen sich die Lichtverteilungen erzeugen, wenn die zumindest eine Zeile, welche die Lichtaustrittsflächen von LED-Lichtquellen zur Erzeugung der Hauptlichtverteilung enthält, unterhalb der obersten Zeile, welche zumindest eine Lichtaustrittsfläche zur Erzeugung der Zusatzlichtverteilung enthält, angeordnet ist, und wenn weiters die zumindest eine Zeile, welche die Lichtaustrittsflächen von LED-Lichtquellen zur Erzeugung der Hauptlichtverteilung enthält, oberhalb der untersten Zeile, welche zumindest eine Lichtaustrittsfläche zur Erzeugung der Zusatzlichtverteilung enthält, angeordnet ist.

Weiters ist es in obigem Sinne zweckmäßig, wenn eine äußere Spalte von zumindest einer Lichtaustrittsfläche einer LED-Lichtquelle zur Erzeugung der Hauptlichtfunktion und die andere äußere Spalte von zumindest einer Lichtaustrittsfläche einer LED-Lichtquelle zur Erzeugung einer Zusatzlichtfunktion besetzt ist.

Außerdem ist mit Vorteil vorgesehen, dass mehrere Spalten mit Lichtaustrittsflächen von LED-Lichtquellen zur Erzeugung der Zusatzlichtverteilung zumindest zwei solche Lichtaustrittsflächen, vorzugsweise genau zwei solche Lichtaustrittsflächen aufweist.

Dabei ist insbesondere vorgesehen, dass zwei Lichtaustrittsflächen von LED-Lichtquellen einer Spalte zur Erzeugung der Zusatzlichtverteilung jeweils durch zumindest eine Zeile getrennt sind.

Günstig kann es sein, wenn zwei Lichtaustrittsflächen von LED-Lichtquellen einer Spalte zur Erzeugung der Zusatzlichtverteilung jeweils durch genau eine Zeile getrennt sind.

Die Linsen der einzelnen Lichtmodule sind derart ausgebildet, dass die überlagerten Lichtbilder der einzelnen Lichtmodule die Hauptlichtfunktion und/oder die Zusatzlichtfunktion ergeben.

Dabei liegt in der Regel das Hauptaugenmerk darauf, dass die Hauptlichtfunktion optimal erzeugt wird, wobei die Rahmenbedingung gilt, dass natürlich Haupt- und Zusatzlichtfunktion die gesetzlichen Anforderungen erfüllen müssen.

Vorzugsweise ist vorgesehen, dass die Linsen Freiformlinsen sind, welche Freiformlinsen vorzugsweise das Lichtbild der einzelnen LED-Lichtquellen nach unten und in der Breite aufweiten.

Mit einem oben beschriebenen Fahrzeugscheinwerfer können unterschiedliche Hauptlicht- und Zusatzlichtfunktionen erzeugt werden. Falls die Hauptlichtverteilung, etwa im Fall einer Abblendlichtverteilung, einen asymmetrischen Anteil in der Lichtverteilung aufweisen muss, dann lässt sich dieser am einfachsten realisieren, wenn zumindest ein weiteres Lichtmodul zur Erzeugung eines Asymmetrieanteils in der Hauptlichtverteilung vorgesehen ist.

Dabei ist vorgesehen, dass das zumindest eine weitere Lichtmodul zumindest eine LED-Lichtquelle und zumindest eine Linse aufweist, wobei die Linse vorzugsweise eine Sammellinse ist. Anders als bei oben erörterten Lichtmodulen darf bei diesem Lichtmodul das Licht nicht in die Breite verteilt werden, da dies die Asymmetrie (an der HD-Linie) zerstören würde.

Beispielsweise ist die Hauptlichtverteilung eine abgeblendete Lichtverteilung, z.B. eine Abblendlichtverteilung, Nebellicht oder Autobahnlicht (z.B. nach ECE Regelung R 123), und die Zusatzlichtverteilung ist eine Tagfahrlichtverteilung.

Auf Freiformlinsen basierend können unterschiedliche Lichtverteilungen gebildet werden, welche in der Überlappung den gesetzlichen Anforderungen (SAE, ECE, usw.) an die jeweilige Lichtfunktion genügen.

Im Folgenden ist die Erfindung an Hand der Zeichnung näher erörtert. In dieser zeigt
Fig. 1 einen beispielhaften Scheinwerfer bestehend aus sechs Lichtmodulen in einer schematischen Ansicht von schräg vorne,
Fig. 2 zwei LED-Lichtmodule ohne Linsen mit gespiegelter LED-Anordnung,
Fig. 3 eine beispielhafte Anordnung von LED-Lichtquellen für ein LED-Lichtmodul im Detail,
Fig. 4 eine zu der in Figur 3 gezeigten Anordnung spiegelbildliche Anordnung von LED-Lichtquellen bei einem LED-Lichtmodul,
Fig. 5 schematisch ein mit einem LED-Lichtmodul aus Figur 3 auf die Fahrbahn projiziertes Lichtbild,
Fig. 6 schematisch ein mit einem LED-Lichtmodul aus Figur 4 auf die Fahrbahn projiziertes Lichtbild,
Fig. 7 eine gesetzlich vorgeschriebene Tagfahrlicht (DRL) Lichtverteilung,
Fig. 8a - 8d unterschiedliche Einzel-Lichtverteilungen einer beispielsweisen Hauptlicht-Lichtverteilung, erzeugt von Lichtmodulen mit einer Freiformlinse,
Fig. 8e eine Einzel-Lichtverteilung eines Asymmetrie-Lichtmoduls, und
Fig. 8f eine Überlagerung der Einzel-Lichtbilder aus den Figuren 8a - 8e.

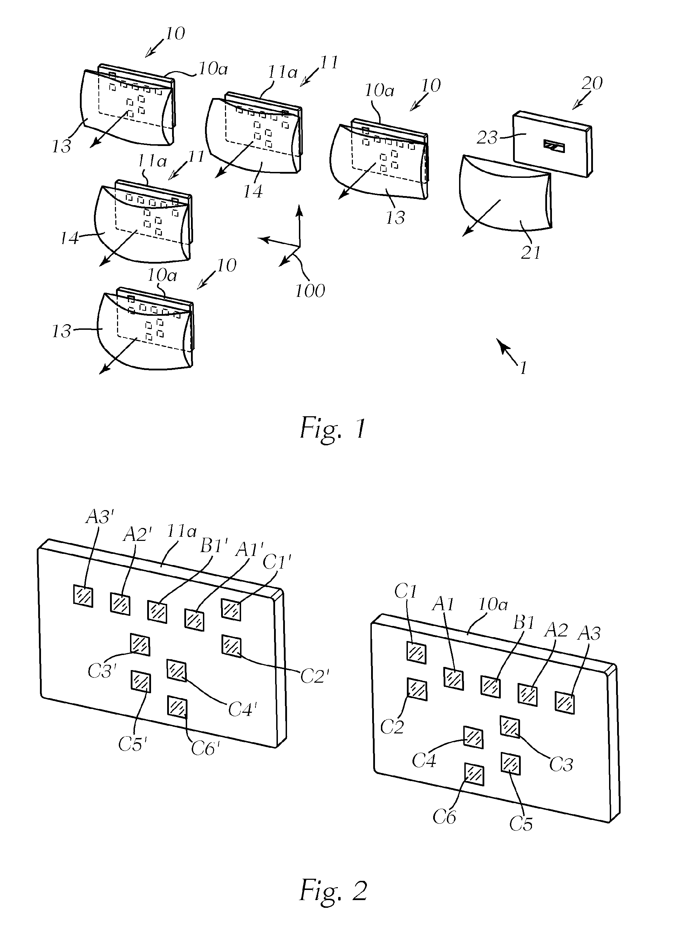

Figur 1 zeigt einen beispielhaften Scheinwerfer 1, welcher zur Erzeugung einer Hauptlicht Lichtfunktion (Hauptlichtverteilung) in Form eines Abblendlichtes und einer Zusatzlicht Lichtfunktion (Zusatzlichtverteilung) in Form eines Tagfahrlichtes ausgebildet ist.

Der Scheinwerfer 1 besteht aus fünf Lichtmodulen 10, 11, mit LED-Lichtquellen, welche in Ebenen 10a, 11a befestigt sind, und wobei hinsichtlich der Anordnung der Lichtaustrittsflächen der LED-Lichtquellen die Lichtmodule 10 einen identischen Aufbau (identisches Layout) aufweisen, und weiters die Lichtmodule 11 ebenfalls einen identischen Aufbau aufweisen. Außerdem ist das Layout der Lichtmodule 10 und jenes der Lichtmodule 11 spiegelbildlich zueinander, wie dies in Figur 2 zu erkennen ist und weiter unten noch näher beschrieben wird.

Jedes Lichtmodul 10, 11 verfügt über eine Linse, vorzugsweise eine Freiform-Linse 13, 14, wobei die Linsen sich im Detail unterscheiden, wie dies später noch erörtert wird. Diese Freiform-Linsen 13,14 weiten das von den LED-Lichtquellen stammende Licht in die Breite und nach unten auf.

Die fünf Lichtmodule 10, 11 bilden eine charakteristische Anordnung, welche das charakteristische Erscheinungsbild des Scheinwerfers erzeugt. Jedes dieser einzelnen Lichtmodule 10, 11 erzeugt einen Teil der Hauptlichtverteilung (Abblendlichtverteilung).

Zur Erzeugung des Asymmetrieanteiles und des Maximums in der Abblendlichtverteilung ist noch ein weiteres Lichtmodul 20 vorgesehen. Das Lichtmodul 20 umfasst eine oder mehrere nicht dargestellte LED-Lichtquellen und zumindest eine Linse 21, wobei die Linse 21 eine Sammellinse ist, mittels welcher das Licht der Lichtquellen in den Außenraum projiziert wird. Anders als bei den Linsen 13, 14 der Lichtmodule 10, 11 darf bei diesem Lichtmodul das Licht nicht in die Breite und vorzugsweise auch nicht in die Höhe verteilt werden, da dies die Asymmetrie (an der HD-Linie) zerstören würde.

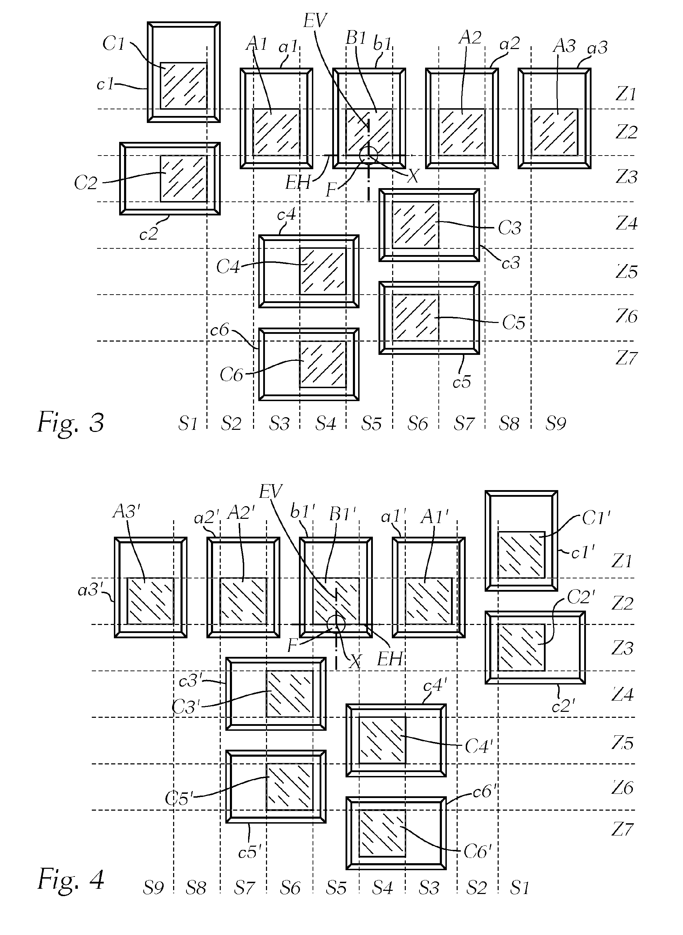

Figur 3 zeigt eine Anordnung der LED-Lichtquellen bzw. deren LED-Lichtaustrittsflächen eines Lichtmoduls 10, Figur 4 zeigt die dazu spiegelbildliche Anordnung der LED-Lichtquellen eines Lichtmoduls 11. Figur 2 zeigt die Anordnung der Lichtaustrittsflächen aus Figur 3 (rechts) und Figur 4 (links) in Ebenen 10a, 11a (Leiterplatten 10a, 11a).

Wie Figur 3 und 4 zu entnehmen ist, sind bei jedem Lichtmodul 10, 11 eine Anzahl von LED-Lichtquellen a1, a2, a3, b1, c1 - c6; a1', a2', a3', b1', c1' - c6' in einer Ebene 10a, 11a (Leiterplatten 10a, 11a) angeordnet.

Jede LED-Lichtquelle a1, a2, a3, b1, c1 - c6; a1', a2', a3', b1', c1' - c6' weist eine rechteckige oder vorzugsweise quadratische Lichtaustrittsfläche A1, A2, A3, B1, C1 - C6; A1', A2', A3', B1', C1' - C6' auf. Die Seitenkanten der Lichtaustrittsflächen A1, A2, A3, B1, C1 - C6; A1', A2', A3', B1', C1' - C6' sind parallel zueinander ausgerichtet, und die LED-Lichtquellen a1, a2, a3, b1, c1 - c6; a1', a2', a3', b1', c1' - c6' in jedem Lichtmodul 10,11 sind in horizontalen Zeilen Z1 - Z7 und vertikalen Spalten S1 - S9 angeordnet.

Mit den Bezugszeichen a1, a2, a3, b1, c1- c6; a1', a2', a3', b1', c1' - c6' ist das Gehäuse der jeweiligen LED-Lichtquelle bezeichnet (es wird hier im Text zumeist einfach von LED-Lichtquelle gesprochen), die Bezugszeichen A1, A2, A3, B1, C1 - C6; A1', A2', A3', B1', C1' - C6' bezeichnen die eigentlichen Licht emittierenden Halbleiter-Chips (LED-Lichtaustrittsflächen), welche in den Gehäusen a1, a2, a3, b1, c1 - c6; a1', a2', a3', b1', c1' - c6' angeordnet sind.

Die LED-Lichtquellen eines Lichtmoduls sind nun zu Gruppen (Schaltgruppen) zusammengefasst, eine dieser Gruppen dient zur Erzeugung der Hauptlichtverteilung (Abblendlicht), die andere Gruppe zur Erzeugung der Zusatzlichtverteilung (Tagfahrlicht).

Dabei sind die Lichtaustrittsflächen B1, C1 - C6; B1', C1' - C6' der LED-Lichtquellen b1, c1- c6; b1', c1' - c6' zur Erzeugung der Zusatzlichtverteilung in mehreren unmittelbar aneinander angrenzenden Zeilen Z1 - Z7 angeordnet, wobei in jeder Zeile eine oder mehrere Lichtaustrittsflächen B1, C1 - C6; B1', C1' - C6' von jeweils einer LED-Lichtquelle b1, c1 - c6; b1', c1' - c6' zur Erzeugung der Zusatzlichtverteilung angeordnet sind, und wobei die Lichtaustrittsflächen B1, C1 - C6; B1', C1' - C6' der LED-Lichtquellen b1, c1 - c6; b1', c1' - c6' zur Erzeugung der Zusatzlichtverteilung über zwei oder mehr Spalten S1, S4, S5, S6 verteilt sind.

Die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung sind in zumindest einer Zeile Z2 angeordnet, wobei in zumindest einer dieser Zeilen Z2 zwei oder mehrere Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung angeordnet sind.

Das von den LED-Lichtquellen eines LED-Moduls 10, 11 emittierte Licht wird direkt auf die Linse 13, 14 des Lichtmoduls abgestrahlt und von dieser in den Außenraum projiziert, je nach aktivierter Gruppe an LED-Lichtquellen trägt jedes Lichtmodul zu der Hauptlichtverteilung oder der Zusatzlichtverteilung bei.

Werden alle LEDs der Module zugleich mit voller Leistung betrieben erhält man eine dritte Funktion (Lichtverteilung), nämlich z.B. eine Fernlichtverteilung. Die Scheinwerfer sehen dabei von außen immer noch ident aus.

Durch die spezielle Anordnung der Lichtaustrittsflächen der LED-Lichtquellen kann einerseits (durch die Anordnung der Lichtaustrittsflächen von LED-Lichtquellen zur Erzeugung der Hauptlichtverteilung in zumindest einer Zeile) ein hohes Maximum im Lichtstrom in einem bestimmten Bereich der Hauptlichtverteilung, z.B. bei einer Abblendlichtverteilung im Bereich unter der Hell-Dunkel-Linie erreicht werden, andererseits ergibt sich über die Verteilung der Lichtaustrittsflächen für die Zusatzlichtverteilung die für eine solche Lichtverteilung üblicherweise, etwa im Falle einer Tagfahrlichtverteilung, geforderte Ausdehnung über einen definierten vertikalen Bereich.

Außerdem ist gefordert, dass die Isoluxlinien im Lichtbild einen charakteristischen vorgegebenen Verlauf aufweisen. Dieser wird dadurch erreicht, dass die Lichtaustrittsflächen erfindungsgemäß in einem Raster aus Zeilen und Spalten angeordnet sind.

Durch diese spezielle Anordnung kann auf eine oder mehrere Vorsatzoptiken, die zwischen den Lichtaustrittsflächen und der Linse angeordnet wäre, verzichtet werden.

Die LED-Lichtquellen, d.h. deren Lichtaustrittsflächen, liegen beispielsweise in einer ebenen Fläche (Ebene) wie dargestellt, die Fläche kann aber auch gekrümmte sein, wobei die Krümmung in etwa der Bildfeldwölbung der Linse folgt.

Ein in Figur 3 (oder Figur 4) gezeigtes Layout an Lichtaustrittsflächen erzeugt eine asymmetrische Zusatzlichtverteilung. Aus diesem Grund verfügt ein Scheinwerfer über zumindest ein LED-Lichtmodule 10 mit einer ersten Anordnung von Lichtaustrittsflächen A1, A2, A3, B1, C1 - C6 seiner LED-Lichtquellen a1, a2, a3, b1, c1 - c6 wie in Figur 3 dargestellt, und zumindest ein weiteres LED-Lichtmodul 11 mit einer zweiten Anordnung von Lichtaustrittsflächen A1', A2', A3', B1', C1' - C6' seiner LED-Lichtquellen a1', a2', a3', b1', c1' - c6' wie in Figur 4 dargestellt.

Die erste Anordnung (Layout nach Figur 3) der Lichtaustrittsflächen A1, A2, A3, B1, C1 - C6 und die zweite Anordnung (Layout nach Figur 4) der Lichtaustrittsflächen A1', A2', A3', B1', C1' - C6' sind bezüglich einer vertikalen Fläche EV, welche die optische Achse X des LED-Moduls 10, 11 enthält, spiegelbildlich zueinander angeordnet.

Die Achse X steht normal auf die Flächen 10a, 11a und "durchstößt' die Ebene 10a, 11a im Brennpunkt F der Linse 13,14. Weiters in Figur 3 und 4 eingezeichnet sind die Ebene EV, um welche das LED-Layout gespiegelt ist und eine Ebene EH, welche normal auf die ebene EV verläuft und durch den Brennpunkt F der Linse 13, 14 verläuft.

Sowohl im linken als auch im rechten Scheinwerfer kommen entsprechend Module mit einem Layout und Module mit einem dazu spiegelsymmetrischen Layout zum Einsatz.

Noch einmal auf die Layouts aus Figur 3 und 4 zurückkommend ist zu erkennen, dass bei der konkreten vorteilhaften Variante benachbarte Zeilen unmittelbar aneinander grenzen; außerdem ist in den Figuren vorgesehen, dass benachbarte Spalten ebenfalls unmittelbar aneinander angrenzen. Die vertikale Ausdehnung ("Höhe") einer Lichtaustrittsfläche einer LED-Lichtquelle entspricht der Höhe jener Zeile, in welcher sie angeordnet ist, und ebenso entspricht die horizontale Ausdehnung ("Breite") einer Lichtaustrittsfläche einer LED-Lichtquelle der Breite jener Spalte entspricht, in welcher sie angeordnet ist. Dadurch ist gewährleistet, dass sich durch die unmittelbar aneinander angrenzenden Zeilen keine horizontalen Streifen im Lichtbild bilden.

Während es wichtig ist, dass die Zeilen aneinander angrenzen, ist ein Aneinandergrenzen der Spalten, wie es zeichnerisch dargestellt ist, nicht notwendig. Es kann zwar von Vorteil sein, wenn die Spalten aneinander grenzen, allerdings werden in der Regel vertikale Streifen, welche durch beabstandete Spalten entstehen können, durch die hohe Breitenausleuchtung der Linsen der LED-Lichtmodule überdeckt.

Die horizontalen (bzw. gegebenenfalls auch die vertikalen) Begrenzungsseiten der Lichtaustrittsflächen in aneinander angrenzenden Zeilen (bzw. gegebenenfalls) Spalten fluchten zueinander, wodurch die Streifenbildung im Lichtbild verhindert wird.

Weiters ist es von Vorteil, wenn die Höhe aller Zeilen gleich ist und die Breite aller Spalten gleich ist. In diesem Fall können identische LED-Lichtquelle verwendet werden.

Beispielsweise sind Höhe und Breite der Zeilen und Spalten gleich, sodass sich quadratische Lichtaustrittsflächen ergeben.

Insbesondere ist es zur Erzeugung eines homogenen Lichtbildes von Vorteil, wenn in jeder Zeile genau eine Lichtaustrittsfläche B1, C1- C6; B1', C1' - C6' von jeweils einer LED-Lichtquelle b1, c1 - c6; b1', c1' - c6' zur Erzeugung der Zusatzlichtverteilung angeordnet ist.

Um die erforderliche Breite der Lichtverteilung und ein in der Breite homogenes Lichtbild zu erreichen, ist es außerdem von Vorteil, wenn die Lichtaustrittsflächen B1, C1 - C6; B1', C1' - C6' der LED-Lichtquellen b1, c1 - c6; b1', c1' - c6' zur Erzeugung der Zusatzlichtverteilung über zwei oder mehr Spalten S1, S4, S5, S6 verteilt sind, wobei zumindest zwei Spalten S4, S5, S6 dieser Spalten S1, S4, S5, S6 beispielsweise unmittelbar aneinander angrenzen.

Weiters ist vorgesehen, dass die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung in zumindest einer Zeile Z2 angeordnet sind, wobei in zumindest einer dieser Zeilen Z2 zwei oder mehrere Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung angeordnet sind, wobei die Lichtaustrittsflächen A1, A2, A3, B1; A1', A2', A3', B1' in unterschiedlichen Spalten S3, S5, S7, S9 angeordnet sind, wobei vorzugsweise wie dargestellt die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung in genau einer Zeile Z2 angeordnet sind.

Auf diese Weise kann optimal auf die an eine Hauptlichtverteilung gestellten Bedingungen (Maximum in der Lichtverteilung, Hell-Dunkel-Grenze bei Abblendlicht) eingegangen werden.

Die LED-Lichtquellen selbst bestehen typischerweise aus einem Gehäuse, in welchem der Licht emittierende Chip, d.h. die Lichtaustrittsfläche, untergebracht ist. Das Gehäuse hat naturgemäß eine größere Ausdehnung als dieser Chip, sodass es in der Regel nicht möglich ist, Lichtaustrittsflächen (Chips) unmittelbar nebeneinander anzuordnen. Außerdem ist es notwendig, Leiterbahnen zu den LED-Lichtquellen zur Steuerung und Energieversorgung zu legen, außerdem muss auf entsprechende Kühlung der Lichtquellen geachtet werden.

All diesen Themen wird grundsätzlich durch die erfindungsgemäße versetzte Anordnung der Lichtaustrittsflächen Rechnung getragen, durch welche die Platzproblematik gelöst wird. Außerdem wird ein einfacheres Thermomanagement möglich, da durch das nicht aneinander grenzen der Lichtaustrittsflächen die entstehende Wärme einfacher abgeführt werden kann. Es sind entsprechend keine aufwändigen Kühler/Lüfter notwendig, u.U. ist auch eine rein passive Kühlung ausreichend.

Insbesondere ist es in obigem Zusammenhang von Vorteil, wenn zumindest manche der benachbarten Spalten S3, S5, S7, S9, in welchen die Lichtaustrittsflächen A1, A2, A3, B1; A1', A2', A3', B1' der LED-Lichtquellen a1, a2, a3, b1; a1', a2', a3', b1' zur Erzeugung der Hauptlichtverteilung angeordnet sind, durch jeweils eine Spalte S4, S6, S8 voneinander getrennt sind.

Insbesondere ist es von Vorteil, wenn wie bei einer konkreten Ausgestaltung realisiert die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung in mehreren Spalten S3, S5, S7, S9 angeordnet sind, welche Spalten S3, S5, S7, S9 durch jeweils eine dazwischen liegende Spalte S4, S6, S8 getrennt sind.

Um den Bauraum in der Ebene der Lichtaustrittsflächen optimal auszunützen, ist bei den gezeigten Varianten nach Figur 3 und 4 weiters vorgesehen, dass eine LED-Lichtquelle B1, B1' eines LED-Lichtmoduls 10, 11 sowohl zur Erzeugung der Hauptlichtverteilung als auch zur Erzeugung der Zusatzlichtverteilung verwendet ist. Weiters ist bei der gezeigten konkreten Ausführungsform vorgesehen, dass alle LED-Lichtquellen a1, a2, a3, b1, c1 - c6; a1', a2', a3', b1', c1' - c6' eines LED-Lichtmoduls 10,11 identisch sind, insbesondere identisch hinsichtlich ihrer Lichtstärke.

Im Zusatzlicht-Betrieb werden die jeweils eingeschalteten LED-Lichtquellen gedimmt oder gepulst betrieben, also mit einer geringeren Lichtstärke als die Lichtquellen im Hauptlichtbetrieb.

Es kann aber auch vorgesehen sein, dass die LED-Lichtquellen a1, a2, a3, b1; a1', a2', a3', b1' zur Erzeugung der Hauptlichtverteilung lichtstärker sind als die LED-Lichtquellen c1- c6; c1' - c6' zur Erzeugung der Zusatzlichtverteilung.

In diesem Fall werden nur jene LED-Lichtquellen, welche zu beiden Lichtverteilungen beitragen, im Zusatzlichtbetrieb gedimmt betrieben.

Zusammengefasst ist es also möglich, dass die "Haupt"-LED-Lichtquellen mit voller Leistung betrieben werden und die "Neben"-LED-Lichtquellen gepulst oder mit verminderter Stromstärke betrieben werden. Es ist aber auch denkbar, unterschiedliche Leistungsklassen der LED-Lichtquelle, untergebracht in einem günstigen Standardgehäuse, zu verwenden.

Optimal lassen sich die Lichtverteilungen erzeugen, wenn die Zeile Z2, welche die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung enthält, unterhalb der obersten Zeile Z1, welche eine Lichtaustrittsfläche C1, C1' zur Erzeugung der Zusatzlichtverteilung enthält, angeordnet ist, und wenn weiters die Zeile Z2, welche die Lichtaustrittsflächen A1, A2, A3, B1; A1', A2', A3', B1' von LED-Lichtquellen a1, a2, a3, b1; a1', a2', a3', b1' zur Erzeugung der Hauptlichtverteilung enthält, oberhalb der untersten Zeile Z7, welche eine Lichtaustrittsfläche C6, C6' zur Erzeugung der Zusatzlichtverteilung enthält, angeordnet ist.

Konkret ist die Zeile Z2 die zweite Zeile von oben. Insgesamt sind sieben Zeilen und neun Spalten pro Lichtmodul bei der gezeigten vorteilhaften Ausführungsform vorgesehen.

Der Brennpunkt F der Linse wird so gelegt, dass sich die Leuchtdioden in Zeile Z2 der Hauptlichtfunktion möglichst ohne (große) Verzerrungen im Lichtbild abbilden lassen. Die Leuchtdioden der Zusatzlichtfunktion sind außerhalb des Brennpunkts angeordnet.

Die Zeile Z2 befindet sich unmittelbar oberhalb der horizontalen Ebene EH durch den Brennpunkt F der Linse. Durch die Linse wird das Lichtbild um eine horizontale und eine vertikale Achse gespiegelt, sodass sich mit den Leuchtdioden aus Zeile Z2 eine Lichtverteilung unterhalb einer horizontalen Hell-Dunkel-Grenze ergibt.

Außerdem ist vorgesehen, dass eine äußere Spalte S9 von zumindest einer, vorzugsweise genau einer Lichtaustrittsfläche A3, A3' einer LED-Lichtquelle a3, a3' zur Erzeugung der Hauptlichtfunktion und die andere äußere Spalte S1 von zumindest einer, vorzugsweise zwei Lichtaustrittsflächen C1, C2, C1', C2' von LED-Lichtquellen c1, c2, c1', c2' zur Erzeugung der Zusatzlichtfunktion besetzt ist.

Außerdem ist mit Vorteil vorgesehen, dass mehrere Spalten S1, S4, S6 mit Lichtaustrittsflächen C1, C2, C4, C6, C3, C5; C1', C2', C4', C6', C3', C5' von LED-Lichtquellen c1, c2, c4, c6, c3, c5; c1', c2', c4', c6', c3', c5' zur Erzeugung der Zusatzlichtverteilung zumindest zwei solche Lichtaustrittsflächen, vorzugsweise genau zwei solche Lichtaustrittsflächen C1, C2, C4, C6, C3, C5; C1', C2', C4', C6', C3', C5' aufweist.

Dabei ist insbesondere vorgesehen, dass zwei Lichtaustrittsflächen C1, C2, C4, C6, C3, C5; C1', C2', C4', C6', C3', C5' von LED-Lichtquellen c1, c2, c4, c6, c3, c5; c1', c2', c4', c6', c3', c5' einer Spalte S1, S4, S6; S1', S4', S6' zur Erzeugung der Zusatzlichtverteilung jeweils durch zumindest eine Zeile Z2, Z6, Z5; Z2', Z6', Z5' getrennt sind. Günstig kann es sein, wenn zwei Lichtaustrittsflächen C1, C2, C4, C6, C3, C5; C1', C2', C4', C6', C3', C5' von LED-Lichtquellen c1, c2, c4, c6, c3, c5; c1', c2', c4', c6', c3', c5' einer Spalte S1, S4, S6; S1', S4', S6' zur Erzeugung der Zusatzlichtverteilung jeweils durch genau eine Zeile Z2, Z6, Z5; Z2', Z6', Z5' getrennt sind.

Die Spalten S2, S8 sind aus platztechnischen Gründen leer, d.h. mit keinen Lichtaustrittsflächen besetzt.

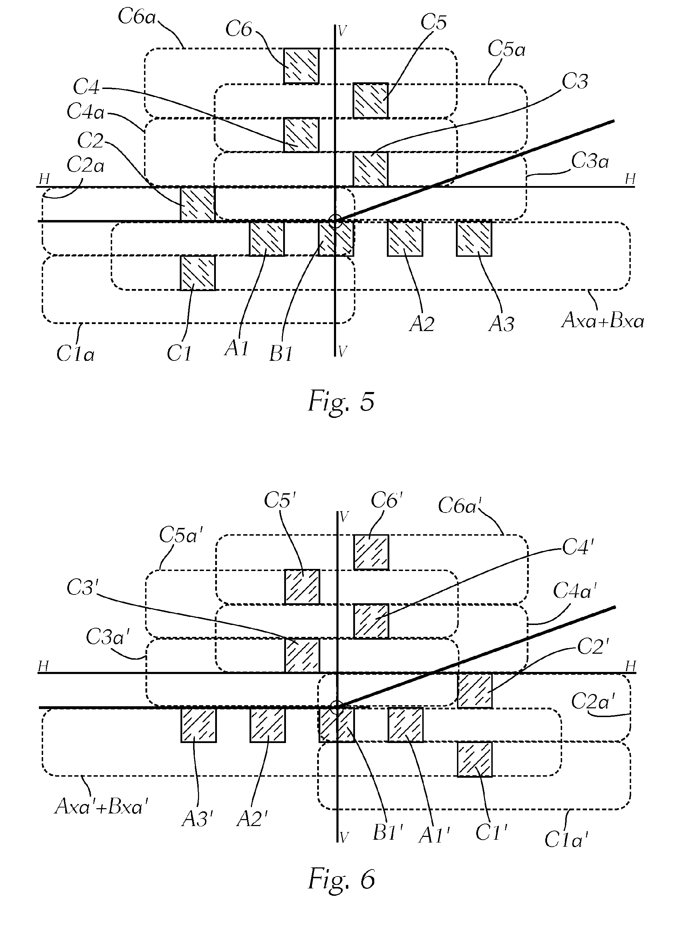

Die Figuren 5 und 6 zeigen die mit einem Lichtmodul 10 bzw. 11 erzeugte Lichtverteilung. Die Figuren 5 und 6 zeigen einerseits, wo die einzelnen Lichtbilder der Lichtausrittsflächen A1, A2, A3, ......., B1, .... , C1- C6, ...... zu liegen kämen, wenn die Linsen 13 keine horizontal und vertikal aufweitende Wirkung ausüben würden.

Mit Axa + Bxa bzw. Axa' + Bxa' ist das von den Linsen und den Leuchtdioden A1 - A3, B1 bzw. A1' - A3', B1' tatsächlich erzeugte Lichtbild dargestellt (Abblendlicht). Der Asymmetrieanteil in der Hell-Dunkel-Grenze wird mit dem Lichtmodul 20 erzeugt.

Mit C1a - C6a bzw. C1a' - C6a'sind schließlich die Lichtbilder der einzelnen Leuchtdioden der Zusatzlichtverteilung dargestellt. Das Licht der einzelnen Licht emittierenden Chips wird in die Breite gefächert und nach unten aufgeweitet.

Dazu sind die Linsen derart geformt, dass in der Linsen-Sagittalebene die Lichtstrahlen nahe der optischen Achse gerade aus projiziert werden, während mit zunehmendem Abstand zum oberen und unteren Linsenrand hin die Lichtstrahlen immer stärker nach unten gebrochen werden.

In dem gezeigten Beispiel sind die beiden äußeren Linsen 13 in der oberen Zeile spiegelverkehrt zueinander (spiegelverkehrt um eine vertikale Achse), die unterste Linse 13 ist identisch zu der darüber liegenden Linse 14.

Durch die Erstreckung/Aufteilung der Leuchtdioden über mehrere Zeilen erhält man die notwendige vertikale Ausdehnung im Lichtbild der Zusatzlichtverteilung.

Durch die exakt fluchtende Anordnung der Leuchtdioden der Zusatzlichtfunktion entstehen keine Schatten im Lichtbild, was passieren würde, wenn man einen Abstand zwischen den Lichtaustrittsflächen hätte ("Kanalgittereffekt"). Mit der vorgeschlagenen LED-Anordnung erreicht man eine äußerst homogene Zusatzlicht (Tagfahrlicht)-Lichtverteilung.

LED-Chips können nicht in beliebiger Zahl direkt aneinander grenzend angeordnet werden, da diese schnell überhitzen würden und sich auch nicht mehr kontaktieren lassen. Dieses Problem wird auf kostengünstige Weise, ohne Spezielanfertigung von LED-Chips und/oder Prints, durch die vorliegende Erfindung gelöst.

Die Lichtaustrittsflächen sind in einem Raster aus horizontalen Zeilen und vertikalen Spalten angeordnet, die Zeilen und Spalten grenzen jeweils unmittelbar aneinander, die Lichtaustrittsflächen liegen exakt in einem Schnitt-Kästchen von Zeile und Raster und die Lichtaustrittsfläche entspricht in Form und Größe einem solchen Kästchen.

Es können für die Erfindung günstige Standard-LEDs verwendet werden, es sind keine speziellen, besonders lichtstarken Leuchtdioden notwendig.

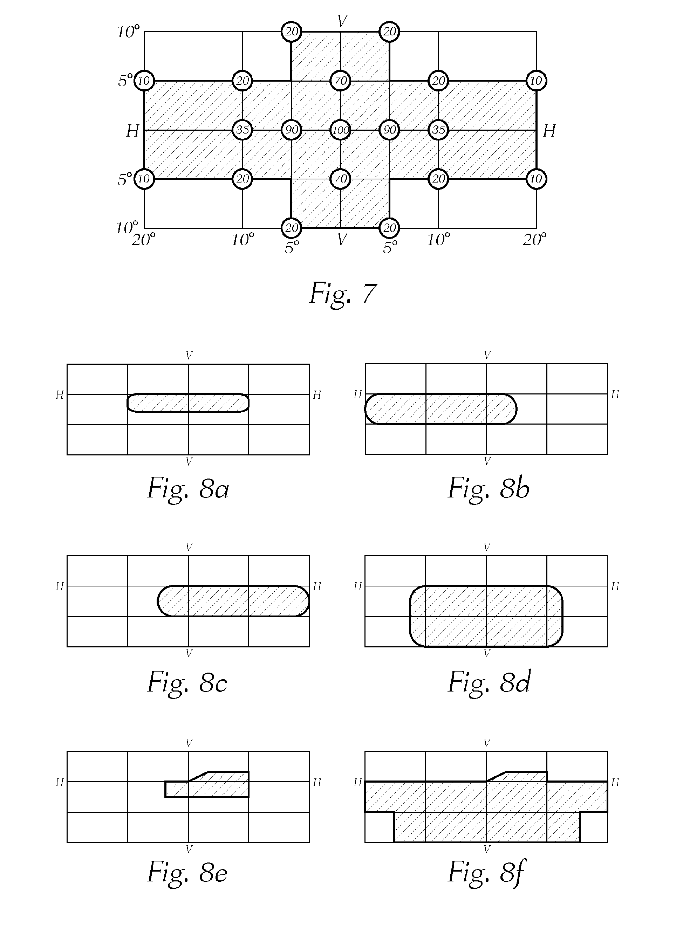

Figur 7 zeigt eine gesetzlich vorgeschriebene Tagfahrlicht (DRL) Lichtverteilung, welche ein Maximum im Zentrum, auf HV, hat.

Es handelt sich um keine völlig homogen verteilte Lichtverteilung, vielmehr ist das Licht im Zentrum konzentriert, die sich in die Breite erstreckt.

Figur 8f zeigt eine Abblendlichtverteilung. Die Figuren 8a - 8d zeigen ein Set möglicher Einzel-Lichtverteilungen (der Hauptlichtverteilung) einzelner Lichtmodule 10, 11 mit entsprechenden Linsen 13, z.B. Freiformlinsen, als Beitrag zu dieser Hauptlicht-/Abblendlichtverteilung. Die unterschiedlichen Lichtverteilungen ergeben sich durch die unterschiedlichen Linsen 13.

Mit der Lichtverteilung in Figur 8a erreicht man ein hohes Maximum des Lichtstroms an der Hell-Dunkel-Linie, die Lichtverteilungen in Figur 8b und Figur 8c stellen die nötige Breite her, und die Lichtverteilung in Figur 8d liefert einen Beitrag für das Vorfeld der Abblendlichtverteilung. Mit einem zusätzlichen Linsenmodul 20 (Sammellinse 21) erhält man die Asymmetrie-Lichtverteilung in Figur 8e. Bei dem beispielhaften Asymmetrie-Modul 20 wird mit einer Primär-LED-Lichtquelle in Zusammenspiel mit einem Lichttunnel als Teil eines Optikelementes 23 der typische Anstieg im Lichtbild der Abblendlichtverteilung erzeugt.

Durch Überlagerung der Lichtverteilungen erhält man schließlich die Abblendlichtverteilung in Figur 8f.

## Patentansprüche

1. Fahrzeugscheinwerfer (1) zur Erzeugung einer Hauptlichtverteilung und einer Zusatzlichtverteilung, wobei der Fahrzeugscheinwerfer (1) zwei oder mehr LED-Lichtmodule (10, 11) umfasst, wobei jedes LED-Lichtmodul (10, 11) eine Anzahl an LED-Lichtquellen (a1, a2, a3, b1, c1 - c6; a1', a2', a3', b1', c1' - c6') umfasst, wobei jede LED-Lichtquelle (a1, a2, a3, b1, c1 - c6; a1', a2', a3', b1', c1' - c6') aus einem Gehäuse (a1, a2, a3, b1, c1 - c6; a1', a2', a3', b1', c1' - c6') und einem in dem Gehäuse angeordneten Licht emittierenden Halbleiter-Chip mit einer rechteckigen oder quadratischen Lichtaustrittsfläche (A1, A2, A3, B1, C1 - C6; A1', A2', A3', B1', C1' - C6') besteht,
wobei die Gehäuse der LED-Lichtquellen (a1, a2, a3, b1, c1 - c6; a1', a2', a3', b1', c1' - c6') jeweils eine größere Ausdehnung als ihr Licht emittierender Chip aufweisen,
und wobei die Lichtaustrittsflächen (A1, A2, A3, B1, C1 - C6; A1', A2', A3', B1', C1' - C6') in einer gemeinsamen Fläche liegen und wobei die Seitenkanten der Lichtaustrittsflächen (A1, A2, A3, B1, C1 - C6; A1', A2', A3', B1', C1' - C6') parallel zueinander ausgerichtet sind, und wobei die LED-Lichtquellen (a1, a2, a3, b1, c1 - c6; a1', a2', a3', b1', c1' - c6') in horizontalen Zeilen (Z1 - Z7) und vertikalen Spalten (S1 - S9) angeordnet sind,
und wobei jedes LED-Lichtmodul (10, 11) eine Linse (13,14) umfasst, und wobei das von den LED-Lichtquellen eines LED-Moduls (10, 11) emittierte Licht direkt auf die Linse (13, 14) abgestrahlt und von dieser in den Außenraum projiziert wird, wobei das von den LED-Lichtquellen der LED-Module (10, 11) emittierte Licht die Hauptlichtverteilung oder die Zusatzlichtverteilung bildet,
wobei in jeder Zeile eine oder mehrere Lichtaustrittsflächen (B1, C1 - C6; B1', C1' - C6') von jeweils einer LED-Lichtquelle (b1, c1 - c6; b1', c1' - c6') zur Erzeugung der Zusatzlichtverteilung angeordnet sind,
und wobei die Lichtaustrittsflächen (B1, C1 - C6; B1', C1' - C6') der LED-Lichtquellen (b1, c1 - c6; b1', c1' - c6') zur Erzeugung der Zusatzlichtverteilung über zumindest eine, vorzugsweise über zwei oder mehr Spalten (S1, S4, S5, S6) verteilt sind,
und wobei die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung in zumindest einer Zeile (Z2) angeordnet sind,
wobei in zumindest einer dieser Zeilen (Z2) zumindest eine, vorzugsweise zwei oder mehrere Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung angeordnet sind,
**dadurch gekennzeichnet, dass**
die Lichtaustrittsflächen (B1, C1 - C6; B1', C1' - C6') der LED-Lichtquellen (b1, c1 - c6; b1', c1' - c6') zur Erzeugung der Zusatzlichtverteilung in mehreren unmittelbar aneinander angrenzenden Zeilen (Z1 - Z7) angeordnet sind, und wobei
die vertikale Ausdehnung ("Höhe") der Lichtaustrittsflächen der LED-Lichtquellen jeweils der Höhe jener Zeile entspricht, in welcher die Lichtaustrittsfläche angeordnet ist.

2. Scheinwerfer nach Anspruch 1, **dadurch gekennzeichnet, dass** in jeder Zeile genau eine Lichtaustrittsfläche (B1, C1 - C6; B1', C1' - C6') von jeweils einer LED-Lichtquelle (b1, c1 - c6; b1', c1' - c6') zur Erzeugung der Zusatzlichtverteilung angeordnet ist.

3. Scheinwerfer nach Anspruch 1 oder 2, **dadurch gekennzeichnet, dass** die Lichtaustrittsflächen (B1, C1 - C6; B1', C1' - C6') der LED-Lichtquellen (b1, c1 - c6; b1', c1' - c6') zur Erzeugung der Zusatzlichtverteilung über zwei oder mehr Spalten (S1, S4, S5, S6) verteilt sind,
wobei zumindest zwei, vorzugsweise drei Spalten (S4, S5, S6) dieser Spalten (S1, S4, S5, S6) unmittelbar aneinander angrenzen.

4. Scheinwerfer nach einem der Ansprüche 1 bis 3, **dadurch gekennzeichnet, dass** die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung in zumindest einer Zeile (Z2) angeordnet sind, wobei in zumindest einer dieser Zeilen (Z2) zwei oder mehrere Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung angeordnet sind, wobei die Lichtaustrittsflächen (A1, A2, A3, B1; A1', A2', A3', B1') in unterschiedlichen Spalten (S3, S5, S7, S9) angeordnet sind.

5. Scheinwerfer nach einem der Ansprüche 1 bis 4, **dadurch gekennzeichnet, dass** die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung in genau einer Zeile (Z2) angeordnet sind.

6. Scheinwerfer nach einem der Ansprüche 1 bis 5, **dadurch gekennzeichnet, dass** zumindest manche der benachbarten Spalten (S3, S5, S7, S9), in welchen die Lichtaustrittsflächen (A1, A2, A3, B1; A1', A2', A3', B1') der LED-Lichtquellen (a1, a2, a3, b1; a1', a2', a3', b1') zur Erzeugung der Hauptlichtverteilung angeordnet sind, durch jeweils eine Spalte (S4, S6, S8) voneinander getrennt sind.

7. Scheinwerfer nach einem der Ansprüche 1 bis 6, **dadurch gekennzeichnet, dass** die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung in mehreren Spalten (S3, S5, S7, S9) angeordnet sind, welche Spalten (S3, S5, S7, S9) durch jeweils eine dazwischen liegende Spalte (S4, S6, S8) getrennt sind.

8. Scheinwerfer nach einem der Ansprüche 1 bis 7, **dadurch gekennzeichnet, dass** zumindest eine LED-Lichtquelle (B1, B1') eines LED-Lichtmoduls (10, 11) sowohl zur Erzeugung der Hauptlichtverteilung als auch zur Erzeugung der Zusatzlichtverteilung vorgesehen ist, wobei vorzugsweise genau eine LED-Lichtquelle (B1, B1') eines LED-Lichtmoduls (10, 11) sowohl zur Erzeugung der Hauptlichtverteilung als auch zur Erzeugung der Zusatzlichtverteilung vorgesehen ist.

9. Scheinwerfer nach einem der Ansprüche 1 bis 8, **dadurch gekennzeichnet, dass** alle LED-Lichtquellen (a1, a2, a3, b1, c1 - c6; a1', a2', a3', b1', c1' - c6') eines LED-Lichtmoduls (10, 11) identisch sind, insbesondere identisch hinsichtlich ihrer Lichtstärke, oder die LED-Lichtquellen (a1, a2, a3, b1; a1', a2', a3', b1') zur Erzeugung der Hauptlichtverteilung lichtstärker sind als die LED-Lichtquellen (c1 - c6; c1' - c6') zur Erzeugung der Zusatzlichtverteilung.

10. Scheinwerfer nach einem der Ansprüche 1 bis 9, **dadurch gekennzeichnet, dass** er zumindest ein LED-Lichtmodule (10) mit einer ersten Anordnung von Lichtaustrittsflächen (A1, A2, A3, B1, C1 - C6) seiner LED-Lichtquellen (a1, a2, a3, b1, c1 - c6) aufweist, und wobei zumindest ein weiteres LED-Lichtmodul (11) mit einer zweiten Anordnung von Lichtaustrittsflächen (A1', A2', A3', B1', C1' - C6') seiner LED-Lichtquellen (a1', a2', a3', b1', c1' - c6') vorgesehen ist, und wobei vorzugsweise die erste Anordnung der Lichtaustrittsflächen (A1, A2, A3, B1, C1 - C6) und die zweite Anordnung der Lichtaustrittsflächen (A1', A2', A3', B1', C1' - C6') bezüglich einer vertikalen Fläche, welche die optische Achse (X) des LED-Moduls (10, 11) enthält, spiegelbildlich zueinander angeordnet sind.

11. Scheinwerfer nach einem der Ansprüche 1 bis 10, **dadurch gekennzeichnet, dass** die zumindest eine Zeile (Z2), welche die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung enthält, unterhalb der obersten Zeile (Z1), welche zumindest eine Lichtaustrittsfläche (C1, C1') zur Erzeugung der Zusatzlichtverteilung enthält, angeordnet ist.

12. Scheinwerfer nach einem der Ansprüche 1 bis 11, **dadurch gekennzeichnet, dass** die zumindest eine Zeile (Z2), welche die Lichtaustrittsflächen (A1, A2, A3, B1; A1', A2', A3', B1') von LED-Lichtquellen (a1, a2, a3, b1; a1', a2', a3', b1') zur Erzeugung der Hauptlichtverteilung enthält, oberhalb der untersten Zeile (Z7), welche zumindest eine Lichtaustrittsfläche (C6, C6') zur Erzeugung der Zusatzlichtverteilung enthält, angeordnet ist.

13. Scheinwerfer nach einem der Ansprüche 1 bis 12, **dadurch gekennzeichnet, dass** eine äußere Spalte (S9) von zumindest einer Lichtaustrittsfläche (A3, A3') einer LED-Lichtquelle (a3, a3') zur Erzeugung der Hauptlichtfunktion und die andere äußere Spalte (S1) von zumindest einer Lichtaustrittsfläche (C1, C2, C1', C2') einer LED-Lichtquelle (c1, c2, c1', c2') zur Erzeugung einer Zusatzlichtfunktion besetzt ist.

14. Scheinwerfer nach einem der Ansprüche 1 bis 13, **dadurch gekennzeichnet, dass** mehrere Spalten (S1, S4, S6) mit Lichtaustrittsflächen (C1, C2, C4, C6, C3, C5; C1', C2', C4', C6', C3', C5') von LED-Lichtquellen (c1, c2, c4, c6, c3, c5; c1', c2', c4', c6', c3', c5') zur Erzeugung der Zusatzlichtverteilung zumindest zwei solche Lichtaustrittsflächen, vorzugsweise genau zwei solche Lichtaustrittsflächen (C1, C2, C4, C6, C3, C5; C1', C2', C4', C6', C3', C5') aufweist, wobei vorzugsweise zwei Lichtaustrittsflächen (C1, C2, C4, C6, C3, C5; C1', C2', C4', C6', C3', C5') von LED-Lichtquellen (c1, c2, c4, c6, c3, c5; c1', c2', c4', c6', c3', c5') einer Spalte (S1, S4, S6; S1', S4', S6') zur Erzeugung der Zusatzlichtverteilung jeweils durch zumindest eine Zeile (Z2, Z6, Z5; Z2', Z6', Z5') getrennt sind, wobei vorteilhafterweise zwei Lichtaustrittsflächen (C1, C2, C4, C6, C3, C5; C1', C2', C4', C6', C3', C5') von LED-Lichtquellen (c1, c2, c4, c6, c3, c5; c1', c2', c4', c6', c3', c5') einer Spalte (S1, S4, S6; S1', S4', S6') zur Erzeugung der Zusatzlichtverteilung jeweils durch genau eine Zeile (Z2, Z6, Z5; Z2', Z6', Z5') getrennt sind.

15. Fahrzeugscheinwerfer nach einem der Ansprüche 1 bis 14, **dadurch gekennzeichnet, dass** die Linsen (13) der einzelnen Lichtmodule (10) derart ausgebildet sind, dass die überlagerten Lichtbilder der einzelnen Lichtmodule (10) die Hauptlichtfunktion und/oder die Zusatzlichtfunktion ergeben, wobei vorzugsweise die Linsen (13) Freiformlinsen sind, welche Freiformlinsen vorzugsweise das Lichtbild der einzelnen LED-Lichtquellen nach unten und/ oder in die Breite aufweiten.

16. Fahrzeugscheinwerfer nach einem der Ansprüche 1 bis 15, **dadurch gekennzeichnet, dass** zumindest ein weiteres Lichtmodul (20) zur Erzeugung eines Asymmetrieanteils in der Hauptlichtverteilung vorgesehen ist, wobei vorzugsweise das zumindest eine weitere Lichtmodul (20) zumindest eine LED-Lichtquelle und zumindest eine Linse (21) aufweist, wobei vorteilhafterweise die Linse (21) eine Sammellinse ist.

17. Fahrzeugscheinwerfer nach einem der Ansprüche 1 bis 16, **dadurch gekennzeichnet, dass** die Hauptlichtverteilung eine abgeblendete Lichtverteilung, z.B. eine Abblendlichtverteilung, Nebellicht oder Autobahnlicht ist.

18. Fahrzeugscheinwerfer nach einem der Ansprüche 1 bis 17, **dadurch gekennzeichnet, dass** die Zusatzlichtverteilung eine Tagfahrlichtverteilung ist.

19. Fahrzeugscheinwerfer nach einem der Ansprüche 1 bis 18, **dadurch gekennzeichnet, dass** benachbarte Zeilen unmittelbar aneinander grenzen.

20. Fahrzeugscheinwerfer nach einem der Ansprüche 1 bis 19, **dadurch gekennzeichnet, dass** benachbarte Spalten unmittelbar aneinander angrenzen.

21. Fahrzeugscheinwerfer nach einem der Ansprüche 1 bis 20, **dadurch gekennzeichnet, dass** die horizontale Ausdehnung ("Breite") einer Lichtaustrittsfläche einer LED-Lichtquelle der Breite jener Spalte entspricht, in welcher sie angeordnet ist.

22. Fahrzeugscheinwerfer nach einem der Ansprüche 1 bis 21, **dadurch gekennzeichnet, dass** die Höhe aller Zeilen gleich ist.

23. Fahrzeugscheinwerfer nach einem der Ansprüche 1 bis 22, **dadurch gekennzeichnet, dass** die Breite aller Spalten gleich ist.

24. Fahrzeugscheinwerfer nach einem der Ansprüche 1 bis 23, **dadurch gekennzeichnet, dass** Höhe und Breite der Zeilen und Spalten gleich sind.

## Claims

1. A vehicle headlight (1) for generating a main light distribution and a secondary light distribution, wherein the vehicle headlight (1) comprises two or more LED light modules (10, 11), wherein each LED light module (10, 11) comprises a number of LED light sources (al, a2, a3, b1, c1 - c6; a1', a2', a3', b1', c1' - c6'), wherein each LED light source (a1, a2, a3, b1, c1 - c6; a1', a2', a3', b1', c1' - c6') consists of a housing (a1, a2, a3, b1, c1 - c6; a1', a2', a3', b1', c1' - c6') and a light-emitting semiconductor chip which is arranged in the housing and has a rectangular or square light outlet surface (A1, A2, A3, B1, C1 - C6; A1', A2', A3', B1', C1' - C6'),
wherein the housing of the LED light sources (a1, a2, a3, b1, c1 - c6; a1', a2', a3', b1', c1' - c6') in each case has a greater extent than its light-emitting chip,
and wherein the light outlet surfaces (A1, A2, A3, B1, C1 - C6; A1', A2', A3', B1', C1' - C6') lie in a common surface, and wherein the side edges of the light outlet surfaces (A1, A2, A3, B1, C1 - C6; A1', A2', A3', B1', C1' - C6') are oriented parallel to one another, and wherein the LED light sources (a1, a2, a3, b1, c1 - c6; a1', a2', a3', b1', c1' - c6') are arranged in horizontal rows (Z1 - Z7) and vertical columns (S1 - S9),
and wherein each LED light module (10, 11) comprises a lens (13, 14), and wherein the light emitted by the LED light sources of an LED module (10, 11) is irradiated directly onto the lens (13, 14) and is projected therefrom into the outside space, wherein the light emitted by the LED light sources of the LED modules (10, 11) forms the main light distribution or the secondary light distribution,
wherein one or more light outlet surfaces (B1, C1 - C6; B1', C1' - C6') of a respective LED light source (b1, c1 - c6; b1', c1' - c6') for generating the secondary light distribution is/are arranged in each row,
and wherein the light outlet surfaces (B1, C1 - C6; B1', C1' - C6') of the LED light sources (b1, c1 - c6; b1', c1' - c6') for generating the secondary light distribution are distributed between at least one column, preferably between two or more columns (S1, S4, S5, S6),
and wherein the light outlet surfaces (A1, A2, A3, B1; A1', A2', A3', B1') of LED light sources (a1, a2, a3, b1; a1', a2', a3', b1') for generating the main light distribution are arranged in at least one row (Z2),
wherein at least one light outlet surface, preferably two or more light outlet surfaces, (A1, A2, A3, B1; A1', A2', A3', B1') of LED light sources (a1, a2, a3, b1; a1', a2', a3', b1') for generating the main light distribution are arranged in at least one of these rows (Z2),
**characterized in that**
the light outlet surfaces (B1, C1 - C6; B1', C1' - C6') of the LED light sources (b1, c1 - c6; b1', c1' - c6') for generating the secondary light distribution are arranged in a plurality of rows (Z1 - Z7) bordering on one another directly, and wherein
the vertical extension ("height") of the light outlet surfaces of the LED light sources corresponds to the height of the row in which the light outlet surface is arranged.

2. The headlight as claimed in claim 1, **characterized in that** exactly one light outlet surface (B1, C1 - C6; B1', C1' - C6') of a respective LED light source (b1, c1 - c6; b1', c1' - c6') for generating the secondary light distribution is arranged in each row.

3. The headlight as claimed in claim 1 or 2, **characterized in that** the light outlet surfaces (B1, C1 - C6; B1', C1' - C6') of the LED light sources (b1, c1 - c6; b1', c1' - c6') for generating the secondary light distribution are distributed between two or more columns (S1, S4, S5, S6),
wherein at least two, preferably three, columns (S4, S5, S6) of these columns (S1, S4, S5, S6) border on one another directly.

4. The headlight as claimed in one of claims 1 to 3, **characterized in that** the light outlet surfaces (A1, A2, A3, B1; A1', A2', A3', B1') of LED light sources (a1, a2, a3, b1; a1', a2', a3', b1') for generating the main light distribution are arranged in at least one row (Z2), wherein two or more light outlet surfaces (A1, A2, A3, B1; A1', A2', A3', B1') of LED light sources (a1, a2, a3, b1; a1', a2', a3', b1') for generating the main light distribution are arranged in at least one of these rows (Z2), wherein the light outlet surfaces (A1, A2, A3, B1; A1', A2', A3', B1') are arranged in different columns (S3, S5, S7, S9).

5. The headlight as claimed in one of claims 1 to 4, **characterized in that** the light outlet surfaces (A1, A2, A3, B1; A1', A2', A3', B1') of LED light sources (a1, a2, a3, b1; a1', a2', a3', b1') for generating the main light distribution are arranged in precisely one row (Z2).

6. The headlight as claimed in one of claims 1 to 5, **characterized in that** at least some of the adjacent columns (S3, S5, S7, S9), in which the light outlet surfaces (A1, A2, A3, B1; A1', A2', A3', B1') of the LED light sources (a1, a2, a3, b1; a1', a2', a3', b1') for generating the main light distribution are arranged, are in each case separated from one another by a column (S4, S6, S8).

7. The headlight as claimed in one of claims 1 to 6, **characterized in that** the light outlet surfaces (A1, A2, A3, B1; A1', A2', A3', B1') of LED light sources (a1, a2, a3, b1; a1', a2', a3', b1') for generating the main light distribution are arranged in a plurality of columns (S3, S5, S7, S9), said columns (S3, S5, S7, S9) being separated in each case by an intermediate column (S4, S6, S8).

8. The headlight as claimed in one of claims 1 to 7, **characterized in that** at least one LED light source (B1, B1') of an LED light module (10, 11) is provided both to generate the main light distribution and to generate the secondary light distribution, whereby preferably precisely one LED light source (B1, B1') of an LED light module (10, 11) is provided to generate the main light distribution and to generate the secondary light distribution.

9. The headlight as claimed in one of claims 1 to 8, **characterized in that** all LED light sources (a1, a2, a3, b1, c1 - c6; a1', a2', a3', b1', c1' - c6') of an LED light module (10, 11) are identical, in particular identical in terms of their luminous intensity, or the LED light sources (a1, a2, a3, b1; a1', a2', a3', b1') for generating the main light distribution are more intense than the LED light sources (c1 - c6; c1' - c6') for producing the secondary light distribution.

10. The headlight as claimed in one of claims 1 to 9, **characterized in that** it has at least one LED light module (10) comprising a first arrangement of light outlet surfaces (A1, A2, A3, B1, C1 - C6) of its LED light sources (a1, a2, a3, b1, c1 - c6), and wherein at least one further LED light module (11) comprising a second arrangement of light outlet surfaces (A1', A2', A3', B1', C1' - C6') of its LED light sources (a1', a2', a3', b1', c1' - c6') is provided, and wherein the first arrangement of the light outlet surfaces (A1, A2, A3, B1, C1 - C6) and the second arrangement of the light outlet surfaces (A1', A2', A3', B1', C1' - C6') are preferably arranged in a manner mirroring one another with respect to a vertical surface containing the optical axis (X) of the LED module (10,11).

11. The headlight as claimed in one of claims 1 to 10, **characterized in that** the at least one row (Z2) containing the light outlet surfaces (A1, A2, A3, B1; A1', A2', A3', B1') of LED light sources (a1, a2, a3, b1; a1', a2', a3', b1') for generating the main light distribution is arranged below the uppermost row (Z1), which contains at least one light outlet surface (C1, C1') for generating the secondary light distribution.

12. The headlight as claimed in one of claims 1 to 11, **characterized in that** the at least one row (Z2) containing the light outlet surfaces (A1, A2, A3, B1; A1', A2', A3', B1') of LED light sources (a1, a2, a3, b1; a1', a2', a3', b1') for generating the main light distribution is arranged above the lowermost row (Z7), which contains at least one light outlet surface (C6, C6') for generating the secondary light distribution.

13. The headlight as claimed in one of claims 1 to 12, **characterized in that** an outer column (S9) is occupied by at least one light outlet surface (A3, A3') of an LED light source (a3, a3') for generating the main-lighting function, and the other outer column (S1) is occupied by at least one light outlet surface (C1, C2, C1', C2') of an LED light source (c1, c2, c1', c2') for generating a secondary lighting function.

14. The headlight as claimed in one of claims 1 to 13, **characterized in that** a plurality of columns (S1, S4, S6) comprising light outlet surfaces (C1, C2, C4, C6, C3, C5; C1', C2', C4', C6', C3', C5') of LED light sources (c1, c2, c4, c6, c3, c5; c1', c2', c4', c6', c3', c5') for generating the secondary light distribution have at least two such light outlet surfaces, preferably precisely two such light outlet surfaces (C1, C2, C4, C6, C3, C5; C1', C2', C4', C6', C3', C5'), whereby preferably two light outlet surfaces (C1, C2, C4, C6, C3, C5; C1', C2', C4', C6', C3', C5') of LED light sources (c1, c2, c4, c6, c3, c5; c1', c2', c4', c6', c3', c5') in the same column (S1, S4, S6; S1', S4', S6') for generating the secondary light distribution are separated in each case by at least one row (Z2, Z6, Z5; Z2', Z6', Z5'), whereby advantageously two light outlet surfaces (C1, C2, C4, C6, C3, C5; C1', C2', C4', C6', C3', C5') of LED light sources (c1, c2, c4, c6, c3, c5; c1', c2', c4', c6', c3', c5') in the same column (S1, S4, S6; S1', S4', S6') for generating the secondary light distribution are in each case separated by precisely one row (Z2, Z6, Z5; Z2', Z6', Z5').

15. The vehicle headlight as claimed in one of claims 1 to 14, **characterized in that** the lenses (13) of the individual light modules (10) are formed in such a way that the superimposed light exposures of the individual light modules (10) produce the main-lighting function and/ or the secondary lighting function, whereby preferably the lenses (13) are free-form lenses, which preferably expand the light exposure of the individual LED light sources downwardly and/or in terms of width.

16. The vehicle headlight as claimed in one of claims 1 to 15, **characterized in that** at least one further light module (20) for generating an asymmetry component in the main light distribution is provided, whereby preferably the at least one further light module (20) has at least one LED light source and at least one lens (21), whereby advantageously the lens (21) is a converging lens.

17. The vehicle headlight as claimed in one of claims 1 to 16, **characterized in that** the main light distribution is a dipped light distribution, for example a dipped headlight beam distribution, fog light or motorway light.

18. The vehicle headlight as claimed in one of claims 1 to 17, **characterized in that** the secondary light distribution is a daytime running light distribution.

19. The vehicle headlight as claimed in one of claims 1 to 18, **characterized in that** adjacent rows border on one another directly.

20. The vehicle headlight as claimed in one of claims 1 to 19, **characterized in that** adjacent columns border on one another directly.

21. The vehicle headlight as claimed in one of claims 1 to 20, **characterized in that** the horizontal extension ("width") of a light outlet surface of an LED light source corresponds to the width of the column in which it is arranged.

22. The vehicle headlight as claimed in one of claims 1 to 21, **characterized in that** the height of all rows is the same.

23. The vehicle headlight as claimed in one of claims 1 to 22, **characterized in that** the width of all columns is the same.

24. The vehicle headlight as claimed in one of claims 1 to 23, **characterized in that** the height and width of the rows and columns are the same.

## Revendications

1. Projecteur de véhicule (1) destiné à produire une répartition lumineuse principale et une répartition lumineuse complémentaire, ledit projecteur de véhicule (1) comprenant au moins deux modules lumineux à DEL (10, 11), chaque module lumineux à DEL (10, 11) comprenant une pluralité de sources lumineuses à DEL (a1, a2, a3, b1, c1 - c6 ; a1', a2', a3', b1', c1' - c6'), chaque source lumineuse à DEL (a1, a2, a3, b1, c1 - c6 ; a1', a2', a3', b1', c1' - c6') étant constituée d'un boîtier (a1, a2, a3, b1, c1 - c6 ; a1', a2', a3', b1', c1' - c6') et d'une puce à semi-conducteur émettant de la lumière, disposée dans le boîtier avec une surface de sortie de lumière (A1, A2, A3, B1, C1 - C6 ; A1', A2', A3', B1', C1' - C6') rectangulaire ou carrée,
les boîtiers des sources lumineuses à DEL (a1, a2, a3, b1, c1 - c6 ; a1', a2', a3', b1', c1' - c6') présentant chacun une extension supérieure à celle de leur puce émettant de la lumière,
les surfaces de sortie de lumière (A1, A2, A3, B1, C1 - C6 ; A1', A2', A3', B1', C1' - C6') étant comprises dans une surface commune, les bords latéraux des surfaces de sortie de lumière (A1, A2, A3, B1, C1 - C6 ; A1', A2', A3', B1', C1' - C6') étant parallèles entre eux, et les sources lumineuses à DEL (a1, a2, a3, b1, c1 - c6 ; a1', a2', a3', b1', c1' - c6') étant disposées en rangées horizontales (Z1 - Z7) et en colonnes verticales (S1 - S9),
chaque module lumineux à DEL (10, 11) comprenant une lentille (13, 14), et la lumière générée par les sources lumineuses à DEL d'un module à DEL (10, 11) étant émise directement vers la lentille (13, 14) et projetée vers l'extérieur par celle-ci, la lumière émise par les sources lumineuses à DEL des modules à DEL (10, 11) formant la répartition lumineuse principale ou la répartition lumineuse complémentaire,
une ou plusieurs surfaces de sortie de lumière (B1, C1 - C6 ; B1', C1' - C6') d'une source lumineuse à DEL (b1, c1 - c6 ; b1', c1' - c6') respective étant disposées dans chaque rangée pour produire la répartition lumineuse complémentaire,
les surfaces de sortie de lumière (B1, C1 - C6 ; B1', C1' - C6') des sources lumineuses à DEL (b1, c1 - c6 ; b1', c1' - c6') étant réparties en au moins une, préférentiellement au moins deux colonnes (S1, S4, S5, S6) pour produire la répartition lumineuse complémentaire,
les surfaces de sortie de lumière (A1, A2, A3, B1 ; A1', A2', A3', B1') des sources lumineuses à DEL (a1, a2, a3, b1 ; a1', a2', a3', b1') étant disposées en au moins une rangée (Z2) pour produire la répartition lumineuse principale,
au moins une, préférentiellement au moins deux surfaces de sortie de lumière (A1, A2, A3, B1 ; A1', A2', A3', B1') des sources lumineuses à DEL (a1, a2, a3, b1 ; a1', a2', a3', b1') étant disposées dans au moins une desdites rangées (Z2) pour produire la répartition lumineuse principale,
**caractérisé en ce que**
les surfaces de sortie de lumière (B1, C1 - C6 ; B1', C1' - C6') des sources lumineuses à DEL (b1, c1 - c6 ; b1', c1' - c6') sont disposées en plusieurs rangées (Z1 - Z7) directement adjacentes l'une à l'autre pour produire la répartition lumineuse complémentaire, et
**en ce que** l'extension verticale (la « hauteur ») d'une surface de sortie de lumière des sources lumineuses à DEL correspond à la hauteur de la rangée où ladite surface de sortie de lumière est disposée.

2. Projecteur selon la revendication 1, **caractérisé en ce que** dans chaque rangée, une seule surface de sortie de lumière (B1, C1 - C6 ; B1', C1' - C6') d'une source lumineuse à DEL (b1, c1 - c6 ; b1', c1' - c6') respective est disposée pour produire la répartition lumineuse complémentaire.

3. Projecteur selon la revendication 1 ou 2, **caractérisé en ce que** les surfaces de sortie de lumière (B1, C1 - C6 ; B1', C1' - C6') des sources lumineuses à DEL (b1, c1 - c6 ; b1', c1' - c6') sont réparties en au moins deux colonnes (S1, S4, S5, S6) pour produire la répartition lumineuse complémentaire, au moins deux, préférentiellement trois colonnes (S4, S5, S6) desdites colonnes (S1, S4, S5, S6) étant directement adjacentes l'une à l'autre.

4. Projecteur selon l'une des revendications 1 à 3, **caractérisé en ce que** les surfaces de sortie de lumière (A1, A2, A3, B1 ; A1', A2', A3', B1') des sources lumineuses à DEL (a1, a2, a3, b1 ; a1', a2', a3', b1') sont disposées en au moins une rangée (Z2) pour produire la répartition lumineuse principale, au moins deux surfaces de sortie de lumière (A1, A2, A3, B1 ; A1', A2', A3', B1') de sources lumineuses à DEL (a1, a2, a3, b1 ; a1', a2', a3', b1') étant disposées dans au moins une desdites rangées (Z2) pour produire la répartition lumineuse principale, les surfaces de sortie de lumière (A1, A2, A3, B1 ; A1', A2', A3', B1') étant disposées dans des colonnes (S3, S5, S7, S9) différentes.

5. Projecteur selon l'une des revendications 1 à 4, **caractérisé en ce que** les surfaces de sortie de lumière (A1, A2, A3, B1 ; A1', A2', A3', B1') des sources lumineuses à DEL (a1, a2, a3, b1 ; a1', a2', a3', b1') sont réparties dans une seule rangée (Z2) pour produire la répartition lumineuse principale.

6. Projecteur selon l'une des revendications 1 à 5, **caractérisé en ce qu'**au moins certaines des colonnes (S3, S5, S7, S9) contiguës où sont disposées les surfaces de sortie de lumière (A1, A2, A3, B1 ; A1', A2', A3', B1') des sources lumineuses à DEL (a1, a2, a3, b1 ; a1', a2', a3', b1') pour produire la répartition lumineuse principale, sont séparées l'une de l'autre par une colonne (S4, S6, S8) respective.

7. Projecteur selon l'une des revendications 1 à 6, **caractérisé en ce que** les surfaces de sortie de lumière (A1, A2, A3, B1 ; A1', A2', A3', B1') des sources lumineuses à DEL (a1, a2, a3, b1 ; a1', a2', a3', b1') sont disposées en plusieurs colonnes (S3, S5, S7, S9) pour produire la répartition lumineuse principale, lesdites colonnes (S3, S5, S7, S9) étant séparées par une colonne (S4, S6, S8) respective intercalée.

8. Projecteur selon l'une des revendications 1 à 7, **caractérisé en ce qu'**au moins une source lumineuse à DEL (B1, B1') d'un module lumineux à DEL (10, 11) est prévue pour produire la répartition lumineuse principale et pour produire la répartition lumineuse complémentaire, une seule source lumineuse à DEL (B1, B1') d'un module lumineux à DEL (10, 11) étant préférentiellement prévue pour produire la répartition lumineuse principale et pour produire la répartition lumineuse complémentaire.

9. Projecteur selon l'une des revendications 1 à 8, **caractérisé en ce que** toutes les sources lumineuses à DEL (a1, a2, a3, b1, c1 - c6 ; a1', a2', a3', b1', c1' - c6') d'un module lumineux à DEL (10, 11) sont identiques, en particulier quant à leur intensité lumineuse, ou **en ce que** les sources lumineuses à DEL (a1, a2, a3, b1 ; a1', a2', a3', b1') pour produire la répartition lumineuse principale ont une intensité lumineuse supérieure à celle des sources lumineuses à DEL (c1 - c6 ; c1' - c6') pour produire la répartition lumineuse complémentaire.

10. Projecteur selon l'une des revendications 1 à 9, **caractérisé en ce qu'**il est pourvu d'au moins un module lumineux à DEL (10) avec un premier agencement de surfaces de sortie de lumière (A1, A2, A3, B1, C1 - C6) de ses sources lumineuses à DEL (a1, a2, a3, b1, c1 - c6), au moins un autre module lumineux à DEL (11) étant prévu avec un deuxième agencement de surfaces de sortie de lumière (A1', A2', A3', B1', C1' - C6') de ses sources lumineuses à DEL (a1', a2', a3', b1', c1' - c6'), et le premier agencement des surfaces de sortie de lumière (A1, A2, A3, B1, C1 - C6) et le deuxième agencement des surfaces de sortie de lumière (A1', A2', A3', B1', C1' - C6') étant préférentiellement symétriques entre eux par rapport à une surface verticale contenant l'axe optique (X) du module à DEL (10, 11).

11. Projecteur selon l'une des revendications 1 à 10, **caractérisé en ce que** la ou les rangées (Z2) qui contiennent les surfaces de sortie de lumière (A1 , A2, A3, B1 ; A1', A2', A3', B1') des sources lumineuses à DEL (a1, a2, a3, b1 ; a1', a2', a3', b1') pour produire la répartition lumineuse principale, sont disposées sous la rangée supérieure (Z1), laquelle contient au moins une surface de sortie de lumière (C1, C1') pour produire la répartition lumineuse complémentaire.

12. Projecteur selon l'une des revendications 1 à 11, **caractérisé en ce que** la ou les rangées (Z2) qui contiennent les surfaces de sortie de lumière (A1, A2, A3, B1 ; A1', A2', A3', B1') des sources lumineuses à DEL (a1, a2, a3, b1 ; a1', a2', a3', b1') pour produire la répartition lumineuse principale, sont disposées sous la rangée inférieure (Z7), laquelle contient au moins une surface de sortie de lumière (C6, C6') pour produire la répartition lumineuse complémentaire.

13. Projecteur selon l'une des revendications 1 à 12, **caractérisé en ce qu'**une colonne extérieure (S9) est occupée par au moins une surface de sortie de lumière (A3, A3') d'une source lumineuse à DEL (a3, a3') pour produire la fonction de lumière principale, et l'autre colonne extérieure (S1) par au moins une surface de sortie de lumière (C1, C2, C1', C2') d'une source lumineuse à DEL (c1, c2, c1', c2') pour produire une fonction de lumière complémentaire.

14. Projecteur selon l'une des revendications 1 à 13, **caractérisé en ce que** plusieurs colonnes (S1, S4, S6) avec des surfaces de sortie de lumière (C1, C2, C4, C6, C3, C5 ; C1', C2', C4', C6', C3', C5') des sources lumineuses à DEL (c1, c2, c4, c6, c3, c5 ; c1', c2', c4', c6', c3', c5') pour produire la répartition lumineuse complémentaire présentent au moins deux surfaces de sortie de lumière de ce type, préférentiellement seulement deux surfaces de sortie de lumière (C1, C2, C4, C6, C3, C5 ; C1', C2', C4', C6', C3', C5') de ce type, deux surfaces de sortie de lumière (C1, C2, C4, C6, C3, C5 ; C1, C2', C4', C6', C3', C5') des sources lumineuses à DEL (c1, c2, c4, c6, c3, c5 ; c1', c2', c4', c6', c3', c5') d'une colonne (S1, S4, S6 ; S1', S4', S6') étant préférentiellement séparées par au moins une rangée (Z2, Z6, Z5 ; Z2', Z6', Z5') respective pour produire la répartition lumineuse complémentaire, deux surfaces de sortie de lumière (C1, C2, C4, C6, C3, C5 ; C1', C2', C4', C6', C3', C5') des sources lumineuses à DEL (c1, c2, c4, c6, c3, c5 ; c1', c2', c4', c6', c3', c5') d'une colonne (S1, S4, S6 ; S1', S4', S6') étant avantageusement séparées par une seule rangée (Z2, Z6, Z5 ; Z2', Z6', Z5') pour produire la répartition lumineuse complémentaire.

15. Projecteur de véhicule selon l'une des revendications 1 à 14, **caractérisé en ce que** les lentilles (13) des différents modules lumineux (10) sont réalisées de telle manière que la fonction de lumière principale et/ou la fonction de lumière complémentaire résultent des images lumineuses superposées des différents modules lumineux (10), les lentilles (13) étant préférentiellement à forme libre, lesdites lentilles à forme libre étendant préférentiellement l'image lumineuse des différentes sources lumineuses à DEL vers le bas et/ou en largeur.

16. Projecteur de véhicule selon l'une des revendications 1 à 15, **caractérisé en ce qu'**au moins un autre module lumineux (20) est prévu pour générer une part asymétrique dans la répartition lumineuse principale, l'autre ou les autres modules lumineux (20) présentant préférentiellement au moins une source lumineuse à DEL et au moins une lentille (21), la lentille (21) étant avantageusement une lentille convergente.

17. Projecteur de véhicule selon l'une des revendications 1 à 16, **caractérisé en ce que** la répartition lumineuse principale est une répartition lumineuse atténuée, telle qu'une répartition lumineuse de croisement, un éclairage antibrouillard ou un éclairage autoroute.

18. Projecteur de véhicule selon l'une des revendications 1 à 17, **caractérisé en ce que** la répartition lumineuse complémentaire est une répartition lumineuse diurne.

19. Projecteur de véhicule selon l'une des revendications 1 à 18, **caractérisé en ce que** les rangées contiguës sont directement adjacentes.

20. Projecteur de véhicule selon l'une des revendications 1 à 19, **caractérisé en ce que** les colonnes contiguës sont directement adjacentes.

21. Projecteur de véhicule selon l'une des revendications 1 à 20, **caractérisé en ce que** l'extension horizontale (« largeur ») d'une surface de sortie de lumière d »une source lumineuse à DEL correspond à la largeur de la colonne où elle est disposée.

22. Projecteur de véhicule selon l'une des revendications 1 à 21, **caractérisé en ce que** toutes les rangées ont une hauteur identique.

23. Projecteur de véhicule selon l'une des revendications 1 à 22, **caractérisé en ce que** toutes les colonnes ont une largeur identique.

24. Projecteur de véhicule selon l'une des revendications 1 à 23, **caractérisé en ce que** la hauteur et la largeur des rangées et des colonnes sont identiques.
